# EUROPEAN PATENT SPECIFICATION

(11) **EP 3 587 946 B1**
(45) Date of publication and mention of the grant of the patent: **01.09.2021**
(21) Application number: 17898162.7
(22) Date of filing: 27.02.2017
(51) Int. Cl.: F24F 11/30, F24D 3/08, F24D 3/18, F24D 17/02, F24D 19/10, F24F 11/38

(54) **AIR CONDITIONER**
KLIMAANLAGE
CLIMATISEUR

(43) Date of publication of application: 01.01.2020
(73) Proprietor: Mitsubishi Electric Corporation, Chiyoda-ku Tokyo 100-8310 (JP)
(72) Inventor: KAWAMURA, Atsushi, Tokyo 100-8310 (JP)
(74) Representative: Pfenning, Meinig & Partner mbB
(86) International application number: PCT/JP2017/007417
(87) International publication number: WO 2018/154768

(56) References cited:
- WO-A1-2014/002133
- WO-A1-2016/174734
- WO-A1-2016/189665
- JP-A- H1 183 127
- JP-A- 2001 133 011
- JP-A- 2015 098 982
- JP-A- 2015 098 982
- JP-A- 2016 121 828

## Description

### Technical Field

The present invention relates to an air-conditioning apparatus and more particularly to a water-cooled air-conditioning apparatus.

### Background Art

As a related-art failure determination method for an air-conditioning apparatus, for example, there is proposed a method that involves determining failure based on operation data acquired in advance during a normal operation and operation condition data during a usual operation (for example, Patent Literature 1). In this method, for example, operation data during a normal operation in a predetermined period is acquired in a database as standard data and operation data after an elapse of a preset time is assigned to the database as operation condition data. Then, the standard data and the operation condition data are compared and a difference of each type due to, for example, an installation environment and operating conditions of the air-conditioning apparatus is reflected, thereby determining whether the failure has occurred in the air-conditioning apparatus. WO2014/002133 discloses a system upon which the preamble of appending claim 1 is based.

### Citation List

### Patent Literature

Patent Literature 1: Japanese Unexamined Patent Application Publication No. 2004-286279

### Summary of Invention

### Technical Problem

However, the method described in Patent Literature 1 involves collecting all the pieces of operation data during the normal operation in the predetermined period. Therefore, the data amount of the collected operation data may increase tremendously. Particularly in a case of a water-cooled air-conditioning apparatus, the air-conditioning temperature range is wider than in a case of an air-cooled air-conditioning apparatus. Therefore, a large-capacity data accumulation device is necessary to collect the operation data.

The present invention has been made in view of the problem in the related art described above and it is therefore an object thereof to provide an air-conditioning apparatus in which failure determination can be made for component devices with a reduced amount of operation data necessary for the determination.

### Solution to Problem

An air-conditioning apparatus according to an embodiment of the present invention is an air-conditioning apparatus including at least a heat pump, a hot water storage tank, a heat exchanger provided in the hot water storage tank, an air-conditioning device, and a circulation pump as component devices, the heat pump, the heat exchanger, the air-conditioning device, and the circulation pump being connected by pipes to form a water circuit in which water circulates through the pipes, the air-conditioning apparatus comprising: a plurality of sensors provided at portions of the water circuit and configured to measure a condition of the water flowing along the water circuit at preset time intervals; and a controller configured to acquire pieces of measurement data sent from the plurality of sensors as operation data and to generate reference operation data based on operation data acquired when a stable operation is performed, wherein the controller is configured to generate abnormal operation information including an abnormal pattern indicating different values of the sensors than usual based on the operation data upon the abnormal stop of the air-conditioning apparatus, and determine a device in failure from among the component devices based on a value of difference between the operation data upon the abnormal stop and the reference operation data, when a pattern identified as the abnormal pattern occurs a preset number of times or more within a preset period.

### Advantageous Effects of Invention

As described above, according to the embodiment of the present invention, the reference operation data is generated based on the operation data acquired during the stable operation and the device in failure is determined based on the reference operation data and the operation data upon the abnormal stop of the air-conditioning apparatus. Accordingly, the failure determination can be made for the component devices with a reduced amount of operation data necessary for the failure determination.

### Brief Description of Drawings

[Fig. 1] Fig. 1 is a schematic diagram illustrating an example of the configuration of an air-conditioning apparatus according to Embodiment 1.
[Fig. 2] Fig. 2 is a block diagram illustrating an example of the configuration of a controller of Fig. 1.
[Fig. 3] Fig. 3 is a flowchart illustrating an example of a flow of reference operation data acquisition processing.
[Fig. 4] Fig. 4 is a flowchart illustrating an example of a flow of failure determination processing.

### Description of Embodiments

### Embodiment 1.

An air-conditioning apparatus according to Embodiment 1 of the present invention is described below.

### [Configuration of Air-Conditioning Apparatus]

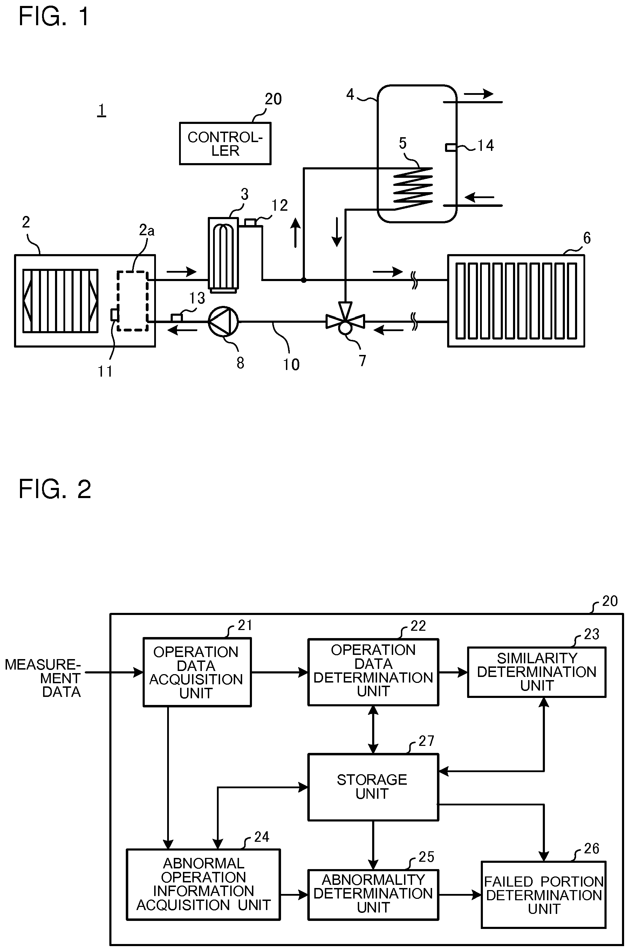

Fig. 1 is a schematic diagram illustrating an example of the configuration of an air-conditioning apparatus 1 according to Embodiment 1. The air-conditioning apparatus 1 includes a heat pump 2, an auxiliary heater 3, a hot water storage tank 4, a heat exchanger 5, an air-conditioning device 6, a three-way valve 7, and a circulation pump 8. In the air-conditioning apparatus 1, the heat pump 2, the auxiliary heater 3, the heat exchanger 5, the air-conditioning device 6, the three-way valve 7, and the circulation pump 8 are connected by pipes to form a water circuit 10.

For example, the heat pump 2 has a refrigeration cycle inside to heat or cool water supplied by the circulation pump. The auxiliary heater 3 is provided to heat water supplied from the heat pump 2, for example, if the heating capacity of the heat pump 2 is insufficient.

The hot water storage tank 4 is provided to store, for example, running water supplied from the outside. The hot water storage tank 4 includes the heat exchanger 5 connected to the water circuit 10. The heat exchanger 5 exchanges heat between water circulating along the water circuit 10 and water stored in the hot water storage tank 4 to heat the water in the hot water storage tank 4 with the heat of the water circulating along the water circuit 10. The water stored in the hot water storage tank 4 is discharged to the outside and used as, for example, hot water of a shower.

For example, the air-conditioning device 6 is a water-cooled heat exchanger. The air-conditioning device 6 exchanges heat between the water circulating along the water circuit 10 and air in a room that is an air-conditioned space (hereinafter referred to as "indoor air" as appropriate) to heat or cool the indoor air with heating energy or cooling energy of the water circulating along the water circuit 10.

For example, the three-way valve 7 is an electric three-way valve having two inlets and one outlet and provided to branch the water circulating along the water circuit 10. For example, the three-way valve 7 switches to allow the water in the water circuit 10 to flow toward the hot water storage tank 4 or the air-conditioning device 6. The circulation pump 8 is driven by an unillustrated motor to supply the water in the water circuit 10 from the heat exchanger 5 or the air-conditioning device 6 to the heat pump 2.

Further, a plurality of sensors configured to measure the condition of the water flowing along the water circuit 10 at preset time intervals are provided at portions of the air-conditioning apparatus 1. In this example, as the sensors, the air-conditioning apparatus 1 is provided with, for example, a liquid pipe temperature sensor 11, a forward water temperature sensor 12, a return water temperature sensor 13, and a tank water temperature sensor 14.

For example, the liquid pipe temperature sensor 11 is provided at the heat pump 2. The liquid pipe temperature sensor 11 measures a liquid pipe temperature of a water heat exchanger 2a provided in the heat pump 2 and supplies measurement data to a controller 20 described later.

For example, the forward water temperature sensor 12 is provided at an outlet of the auxiliary heater 3. The forward water temperature sensor 12 measures a temperature of water flowing out of the auxiliary heater 3 and supplies measurement data to the controller 20. Note that the forward water temperature sensor 12 is not limited to this type of sensor but, for example, if the auxiliary heater 3 is not provided, the forward water temperature sensor 12 may be provided at a water outlet of the water heat exchanger 2a. In this case, the forward water temperature sensor 12 measures a temperature of water flowing out of the water heat exchanger 2a.

For example, the return water temperature sensor 13 is provided at an outlet of the circulation pump 8. The return water temperature sensor 13 measures a temperature of water flowing out of the circulation pump 8 to flow into the heat pump 2 and supplies measurement data to the controller 20. The tank water temperature sensor 14 is provided at the hot water storage tank 4. The tank water temperature sensor 14 measures a temperature of the water in the hot water storage tank 4 and supplies measurement data to the controller 20.

Note that those sensors need not essentially be provided at the portions described above but may be provided at, for example, portions necessary for control depending on the type of the air-conditioning apparatus 1. Further, the sensor is not limited to the temperature sensor alone but may be, for example, a pressure sensor configured to measure a pressure of water at each portion.

The liquid pipe temperature sensor 11 corresponds to a "first temperature sensor" of the present invention. The forward water temperature sensor 12 corresponds to a "second temperature sensor" of the present invention. The return water temperature sensor 13 corresponds to a "third temperature sensor" of the present invention. The tank water temperature sensor 14 corresponds to a "fourth temperature sensor" of the present invention.

For example, the controller 20 includes software to be executed on a processor such as a microcomputer or a CPU (Central Processing Unit) and hardware such as a circuit device that implements various functions.

For example, the controller 20 controls an overall operation of the air-conditioning apparatus 1 based on settings made by a user's operation for an unillustrated remote controller and various types of information received from the portions of the air-conditioning apparatus 1. In Embodiment 1, the controller 20 performs reference operation data acquisition processing and failure determination processing described later based on, for example, information from various sensors provided at the air-conditioning apparatus 1.

Fig. 2 is a block diagram illustrating an example of the configuration of the controller 20 of Fig. 1. Note that, in the example illustrated in Fig. 2, parts related to features of Embodiment 1 are only illustrated and illustration of the other parts is omitted. As illustrated in Fig. 2, the controller 20 includes an operation data acquisition unit 21, an operation data determination unit 22, a similarity determination unit 23, an abnormal operation information acquisition unit 24, an abnormality determination unit 25, a failure portion determination unit 26, and a storage unit 27.

The operation data acquisition unit 21 is supplied with data showing measurement results of the liquid pipe temperature sensor 11, the forward water temperature sensor 12, the return water temperature sensor 13, and the tank water temperature sensor 14. The operation data acquisition unit 21 acquires the measurement data supplied from the sensors as operation data.

The operation data determination unit 22 is supplied with the operation data acquired by the operation data acquisition unit 21. The operation data determination unit 22 determines contents of the operation data based on the supplied operation data and reference operation data stored in the storage unit 27. Note that details of the reference operation data are described later.

The similarity determination unit 23 is supplied with the operation data acquired by the operation data acquisition unit 21. The similarity determination unit 23 determines the similarity of the operation data based on the supplied operation data and previously acquired operation data stored in the storage unit 27.

The abnormal operation information acquisition unit 24 is supplied with the operation data acquired by the operation data acquisition unit 21. If the air-conditioning apparatus 1 stops abnormally, the abnormal operation information acquisition unit 24 acquires abnormal operation information based on the supplied operation data and the previous operation data and the reference operation data stored in the storage unit 27. Details of the abnormal operation information are described later.

The abnormality determination unit 25 is supplied with the abnormal operation information acquired by the abnormal operation information acquisition unit 24. If the air-conditioning apparatus 1 stops abnormally, the abnormality determination unit 25 determines what is occurring in the abnormality based on the supplied abnormal operation information.

The failure portion determination unit 26 is supplied with the abnormal operation information acquired by the abnormal operation information acquisition unit 24. When the abnormality determination unit 25 determines that a component device has failed, the failure portion determination unit 26 determines the failed component device based on the supplied abnormal operation information.

The storage unit 27 stores the operation data, the reference operation data, and various setting values such as thresholds for use in the reference operation data acquisition processing and the failure determination processing. Various types of data stored in the storage unit 27 are read in response to requests from the respective units of the controller 20.

Here, the controller 20 controls the respective units so that the air-conditioning apparatus 1 operates in various operation modes such as a hot water supplying operation, a heating operation, and a cooling operation. Further, in Embodiment 1, the controller 20 has pieces of reference operation data associated with the each of the operation modes.

The reference operation data is operation information constituted by pieces of data obtained through measurement by the liquid pipe temperature sensor 11, the forward water temperature sensor 12, the return water temperature sensor 13, and the tank water temperature sensor 14 during a stable operation. The "stable operation" is an operation in which a thermostat is turned ON and OFF repeatedly after the temperature of air blown from the air-conditioning apparatus 1 has reached a preset temperature. Pieces of reference operation data are prepared for the each of the operation modes such as the cooling operation, the heating operation, and the hot water supplying operation and provided in a table format for the each of the operation modes.

In the cooling operation mode and the heating operation mode, the air-conditioning apparatus 1 operates so that the temperature of indoor air (hereinafter referred to as "indoor temperature" as appropriate) becomes a preset temperature that is set by a user. Therefore, the reference operation data associated with the cooling operation mode and the reference operation data associated with the heating operation mode are prepared for each preset temperature and include pieces of data obtained through measurement by the sensors during the stable operation when each preset temperature is set.

In the hot water supplying operation mode, on the other hand, the air-conditioning apparatus 1 operates at an upper limit frequency of an unillustrated compressor provided in the air-conditioning apparatus 1. The upper limit frequency is set for each type of air-conditioning apparatus. Therefore, one type of data associated with the upper limit frequency is prepared as the reference operation data associated with the hot water supplying operation mode.

Regarding the reference operation data, different results are obtained depending on an installation environment of the air-conditioning apparatus 1. Thus, the reference operation data shows an operation condition during the stable operation suited to a current installation environment.

### [Operations of Air-Conditioning Apparatus]

Next, operations of the air-conditioning apparatus 1 having the configuration described above are described. In Embodiment 1, the controller 20 of the air-conditioning apparatus 1 first performs the reference operation data acquisition processing for acquiring the reference operation data during the stable operation. Then, if the air-conditioning apparatus 1 stops abnormally, the controller 20 performs the failure determination processing for determining failure in various component devices of the air-conditioning apparatus 1 by using the reference operation data acquired in the reference operation data acquisition processing and operation data acquired during an operation.

### (Reference Operation Data Acquisition Processing)

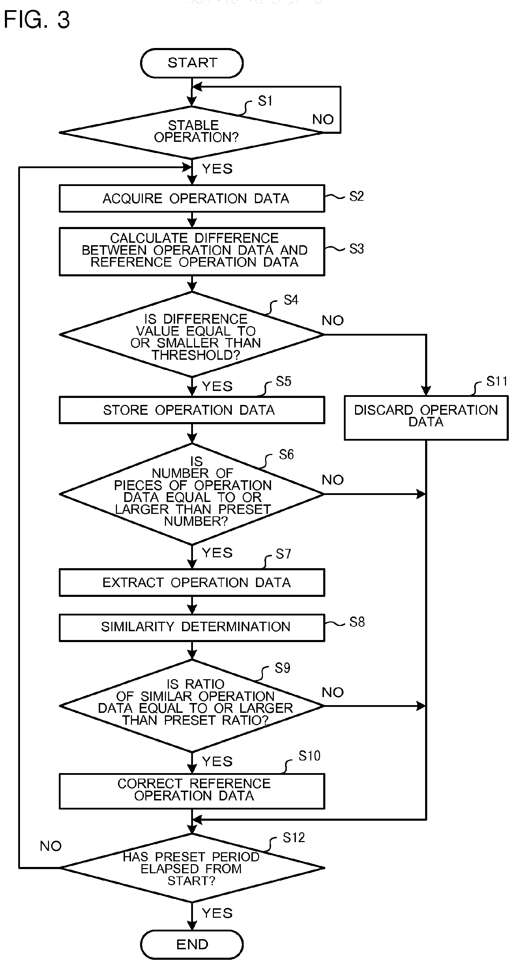

Fig. 3 is a flowchart illustrating an example of a flow of the reference operation data acquisition processing. Note that the following description is made using the expression "operation data" but the "operation data" of Embodiment 1 refers to pieces of data obtained through measurement by the liquid pipe temperature sensor 11, the forward water temperature sensor 12, the return water temperature sensor 13, and the tank water temperature sensor 14.

First, the controller 20 determines whether the operation of the air-conditioning apparatus 1 is the stable operation (Step S1). The determination of whether the operation is the stable operation is made depending on, for example, whether the thermostat is turned ON and OFF in the air-conditioning apparatus 1.

When it is determined that the operation is the stable operation (Step S1; YES), the operation data acquisition unit 21 acquires operation data upon satisfaction of a condition that the thermostat is turned OFF for the second time in the air-conditioning apparatus 1, and the thermostat is turned OFF in the air-conditioning apparatus 1 (Step S2). When it is determined that the operation is not the stable operation (Step S1; NO), on the other hand, the processing returns to Step S1 and the processing of Step S1 is repeated until the operation becomes the stable operation.

Next, the operation data determination unit 22 reads the reference operation data from the storage unit 27 and calculates a value of difference between the operation data acquired in Step S2 and the reference operation data (Step S3). Then, the operation data determination unit 22 compares the calculated value of difference with a preset threshold to determine whether the value of difference is equal to or smaller than the threshold (Step S4). When it is determined that the value of difference is equal to or smaller than the threshold (Step S4; YES), the operation data determination unit 22 stores the operation data acquired in Step S2 in the storage unit 27 (Step S5).

Next, the controller 20 compares the number of pieces of the operation data stored in the storage unit 27 with a preset number to determine whether the number of pieces of the operation data is equal to or larger than the preset number (Step S6). When it is determined that the number of pieces of the operation data is equal to or larger than the preset number (Step S6; YES), the processing proceeds to Step S7. When it is determined that the number of pieces of the operation data is smaller than the preset number (Step S6; NO), on the other hand, the processing proceeds to Step S12.

The similarity determination unit 23 extracts pieces of specific data from each of the plurality of pieces of operation data stored in the storage unit 27, such as the pieces of data obtained through the measurement by the liquid pipe temperature sensor 11, the forward water temperature sensor 12, and the return water temperature sensor 13 (Step S7). Then, the similarity determination unit 23 compares the extracted pieces of specific data to make similarity determination on an operation tendency (Step S8).

The similarity determination for the pieces of operation data is made based on, for example, sensor values acquired when the conditions such as an operation mode, an outdoor air temperature, and a discharged water temperature are the same. Specifically, for example, when the acquired sensor values have the same bias, the similarity determination unit 23 determines that the compared pieces of operation data are "similar". When the acquired sensor values have different biases, on the other hand, the similarity determination unit 23 determines that the compared pieces of operation data are "dissimilar".

The similarity determination unit 23 determines whether the ratio of operation data including similar pieces of specific data (hereinafter referred to as "similar operation data" as appropriate) to all the pieces of operation data stored in the storage unit 27 is equal to or larger than a preset ratio (Step S9). When it is determined that the ratio of the similar operation data is equal to or larger than the preset ratio (Step S9; YES), the similarity determination unit 23 corrects the reference operation data based on the similar operation data (Step S10). When it is determined that the ratio of the similar operation data is smaller than the preset ratio (Step S9; NO), on the other hand, the processing proceeds to Step S12.

Further, when it is determined in Step S4 that the value of difference is larger than the threshold (Step S4; NO), the operation data determination unit 22 discards the operation data acquired in Step S2 (Step S11). Then, the processing proceeds to Step S12.

The controller 20 determines whether a preset period has elapsed from the initial start of the air-conditioning apparatus 1 (Step S12). When it is determined that the preset period has elapsed from the start (Step S12; YES), the series of processing steps is terminated. When it is determined that the preset period has not elapsed from the start (Step S12; NO), on the other hand, the processing proceeds to Step S2.

### (Failure Determination Processing)

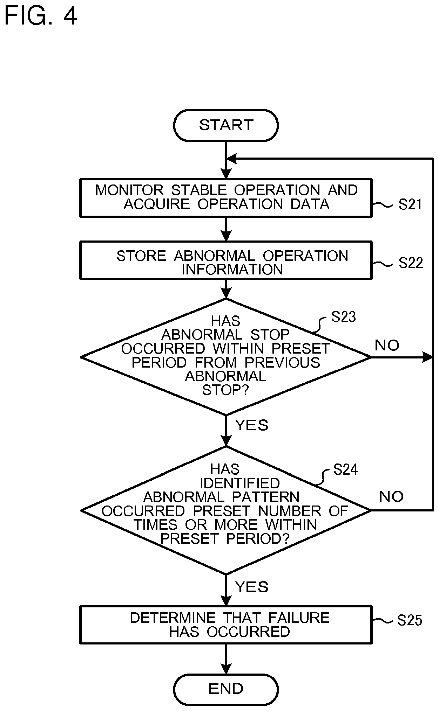

Fig. 4 is a flowchart illustrating an example of a flow of the failure determination processing. The processing illustrated in Fig. 4 is executed when the air-conditioning apparatus 1 is restarted after the reference operation data has been acquired through the reference operation data acquisition processing illustrated in Fig. 3.

First, the controller 20 monitors the stable operation of the air-conditioning apparatus 1 and causes the operation data acquisition unit 21 to acquire operation data at preset time intervals (Step S21).

If the air-conditioning apparatus 1 stops abnormally, the abnormal operation information acquisition unit 24 acquires abnormal operation information and stores the abnormal operation information in the storage unit 27 in association with the time of the abnormal stop (Step S22). For example, the abnormal stop of the air-conditioning apparatus 1 is made when it is determined that an abnormality has occurred based on the values of various sensors. Specifically, for example, the controller 20 compares the values of various sensors with setting values showing preset permissible ranges. Then, when the values of various sensors fall out of the permissible ranges, the controller 20 determines that an abnormality has occurred in the air-conditioning apparatus 1. The controller 20 turns OFF the unillustrated compressor provided in the heat pump 2 and stops an actuator and other component devices.

The abnormal operation information herein refers to an abnormal pattern indicating a different value than usual as in a case in which the value of a specific temperature sensor exceeds its design value, operation data acquired before the air-conditioning apparatus 1 stops abnormally, and a value of difference between operation data upon the abnormal stop and the reference operation data. Note that the value of difference is obtained as differences between pieces of measurement data of corresponding temperature sensors in the operation data and in the reference operation data.

Next, the abnormality determination unit 25 determines whether the current abnormal stop has occurred within a preset period from a previous abnormal stop (Step S23). When the current abnormal stop has occurred within the preset period from the previous abnormal stop (Step S23; YES), the processing proceeds to Step S24. When the current abnormal stop has not occurred within the preset period from the previous abnormal stop (Step S23; NO), on the other hand, the processing returns to Step S21.

The abnormality determination unit 25 determines whether abnormal operation information including an abnormal pattern identified as the abnormal pattern included in the current abnormal operation information stored in the storage unit 27 is stored a preset number of times or more within a preset period (Step S24). When the abnormal pattern identified as the current abnormal pattern is stored the preset number of times or more within the preset period (Step S24; YES), the abnormality determination unit 25 determines that short-term abnormal stops occur intermittently or continuously.

The failure portion determination unit 26 determines that a component device of the air-conditioning apparatus 1 has failed based on the determination result of the abnormality determination unit 25 (Step S25). At this time, the failure portion determination unit 26 determines that the device in failure is, for example, a component device provided between a temperature sensor for which the value of difference is larger than the threshold and a temperature sensor for which the value of difference is equal to or smaller than the threshold.

As described above, the air-conditioning apparatus 1 according to Embodiment 1 includes at least the heat pump 2, the hot water storage tank 4, the heat exchanger 5 provided in the hot water storage tank 4, the air-conditioning device 6, and the circulation pump 8 as the component devices. The heat pump 2, the heat exchanger 5, the air-conditioning device 6, and the circulation pump 8 are connected by pipes to form the water circuit 10 in which water circulates through the pipes.

The air-conditioning apparatus 1 includes sensors including the liquid pipe temperature sensor 11-the tank water temperature sensor 14 provided at portions of the water circuit 10 and configured to measure the condition of the water flowing along the water circuit 10 at the preset time intervals, and the controller 20 configured to acquire pieces of measurement data sent from the sensors including the liquid pipe temperature sensor 11-the tank water temperature sensor 14 as operation data and to generate reference operation data based on operation data acquired during the stable operation. The controller 20 determines a device in failure from among the component devices based on the reference operation data and operation data upon an abnormal stop of the air-conditioning apparatus.

Thus, in Embodiment 1, reference operation data without unnecessary data can be generated by generating the reference operation data based on the operation data during the stable operation. Then, the failure determination is made for the component devices based on the generated reference operation data and the operation data upon the abnormal stop of the air-conditioning apparatus 1. Accordingly, the failure determination can be made for the component devices with a reduced amount of data without collecting unnecessary data.

Although Embodiment 1 of the present invention has been described above, the present invention is not limited to Embodiment 1 described above but various modifications and applications may be made without departing from the scope of the present invention which is defined by the appending claims.

### Reference Signs List

1 air-conditioning apparatus 2 heat pump 2a water heat exchanger 3 auxiliary heater 4 hot water storage tank 5 heat exchanger 6 air-conditioning device 7 three-way valve 8 circulation pump 10 water circuit 11 liquid pipe temperature sensor 12 forward water temperature sensor 13 return water temperature sensor 14 tank water temperature sensor 20 controller 21 operation data acquisition unit 22 operation data determination unit 23 similarity determination unit 24 abnormal operation information acquisition unit 25 abnormality determination unit 26 failure portion determination unit 27 storage unit

## Claims

1. An air-conditioning apparatus (1) including at least a heat pump (2), a hot water storage tank (4), a heat exchanger (5) provided in the hot water storage tank (4), an air-conditioning device (6), and a circulation pump (8) as component devices, the heat pump (2), the heat exchanger (5), the air-conditioning device (6), and the circulation pump (8) being connected by pipes to form a water circuit (10) in which water circulates through the pipes, the air-conditioning apparatus (1) comprising:
a plurality of sensors provided at portions of the water circuit (10) and configured to measure a condition of the water flowing along the water circuit (10) at preset time intervals; and
a controller (20) configured to acquire pieces of measurement data sent from the plurality of sensors as operation data and to generate reference operation data based on operation data acquired when a stable operation is performed,
**characterized in that** the controller (20) is configured to generate abnormal operation information including an abnormal pattern indicating different values of the sensors than usual based on the operation data upon the abnormal stop of the air-conditioning apparatus (1), and
determine a device in failure from among the component devices based on a value of difference between the operation data upon the abnormal stop and the reference operation data, when a pattern identified as the abnormal pattern occurs a preset number of times or more within a preset period.

2. The air-conditioning apparatus (1) of claim 1, wherein the controller (20) is configured to
store operation data in which the value of difference between the operation data and the reference operation data is equal to or smaller than a threshold,
determine, when the number of pieces of the stored operation data is equal to or larger than a preset number, similarity of pieces of specific data included in each of the pieces of the stored operation data, and
correct, when a ratio of similar operation data including similar pieces of the specific data to all the pieces of the stored operation data is equal to or larger than a preset ratio, the reference operation data based on the similar operation data.

3. The air-conditioning apparatus (1) of claim 1 or 2, wherein the reference operation data includes pieces of data in a table format for each of the operation modes and each of the preset temperatures.

4. The air-conditioning apparatus (1) of any one of claims 1 to 3, wherein the plurality of sensors comprise:
a first temperature sensor (11) configured to measure a liquid pipe temperature of a water heat exchanger (2a) provided in the heat pump (2);
a second temperature sensor (12) configured to measure a temperature of water flowing out of the water heat exchanger (2a);
a third temperature sensor (13) configured to measure a temperature of water flowing out of the circulation pump (8); and
a fourth temperature sensor (14) configured to measure a temperature of water in the hot water storage tank (4).

## Patentansprüche

1. Klimaanlage (1), die mindestens eine Wärmepumpe (2), einen Warmwasserspeichertank (4), einen in dem Warmwasserspeichertank (4) vorgesehenen Wärmetauscher (5), eine Klimaanlageneinrichtung (6) und eine Zirkulationspumpe (8) als Komponenteneinrichtungen umfasst, wobei die Wärmepumpe (2), der Wärmetauscher (5), die Klimaanlageneinrichtung (6) und die Zirkulationspumpe (8) durch Leitungen verbunden sind, um einen Wasserkreislauf (10) zu bilden, in dem Wasser durch die Leitungen zirkuliert, wobei die Klimaanlage (1) umfasst:
eine Vielzahl von Sensoren, die an Abschnitten des Wasserkreislaufs (10) vorgesehen sind und eingerichtet sind, einen Zustand des durch den Wasserkreislauf (10) strömenden Wassers in voreingestellten Zeitintervallen zu messen; und
eine Steuereinheit (20), die eingerichtet ist, Teile von Messdaten, die von der Vielzahl von Sensoren gesendet werden, als Betriebsdaten zu erfassen und Referenzbetriebsdaten auf Grundlage von Betriebsdaten, die beschafft werden, wenn ein stabiler Betrieb durchgeführt wird, zu erzeugen,
**dadurch gekennzeichnet, dass** die Steuereinheit (20) eingerichtet ist,
Abnormaler-Betrieb-Informationen zu erzeugen, die ein abnormales Muster aufweisen, das andere Werte der Sensoren als üblich anzeigt, auf Grundlage der Betriebsdaten bei dem abnormalen Stopp der Klimaanlage (1), und
eine fehlerhafte Einrichtung unter den Komponenteneinrichtungen zu bestimmen auf Grundlage eines Differenzwerts zwischen den Betriebsdaten beim abnormalen Stopp und den Referenzbetriebsdaten, wenn ein als das abnormale Muster identifiziertes Muster eine voreingestellte Anzahl von Malen oder mehr innerhalb einer voreingestellten Periode auftritt.

2. Klimaanlage (1) nach Anspruch 1, wobei die Steuereinheit (20) eingerichtet ist,
Betriebsdaten, in denen der Differenzwert zwischen den Betriebsdaten und den Referenzbetriebsdaten gleich oder kleiner als ein Schwellenwert ist, zu speichern,
eine Ähnlichkeit von Stücken von spezifischen Daten, die in jedem der Stücke der gespeicherten Betriebsdaten enthalten sind, zu bestimmen, wenn die Anzahl der Stücke der gespeicherten Betriebsdaten gleich oder größer als eine voreingestellte Anzahl ist, und
die Referenzbetriebsdaten, die auf den ähnlichen Betriebsdaten basieren, zu korrigieren, wenn ein Verhältnis von ähnlichen Betriebsdaten, die ähnliche Teile der spezifischen Daten enthalten, zu allen Teilen der gespeicherten Betriebsdaten gleich oder größer als ein voreingestelltes Verhältnis ist.

3. Klimaanlage (1) nach Anspruch 1 oder 2, wobei die Referenzbetriebsdaten Datenstücke in einem Tabellenformat für jede der Betriebsarten und jede der voreingestellten Temperaturen umfassen.

4. Klimaanlage (1) nach einem der Ansprüche 1 bis 3, wobei die Vielzahl von Sensoren umfassen:
einen ersten Temperatursensor (11), der eingerichtet ist, eine Flüssigkeitsleitungstemperatur eines in der Wärmepumpe (2) vorgesehenen Wasserwärmetauschers (2a) zu messen;
einen zweiten Temperatursensor (12), der eingerichtet ist, eine Temperatur von aus dem Wasserwärmetauscher (2a) strömendem Wasser zu messen;
einen dritten Temperatursensor (13), der eingerichtet ist, eine Temperatur von aus der Zirkulationspumpe (8) strömendem Wasser zu messen; und
einen vierten Temperatursensor (14), der eingerichtet ist, eine Temperatur von Wasser in dem Warmwasserspeichertank (4) zu messen.

## Revendications

1. Appareil de climatisation (1) comprenant au moins une pompe à chaleur (2), un réservoir de stockage d'eau chaude (4), un échangeur de chaleur (5) disposé dans le réservoir de stockage d'eau chaude (4), un dispositif de climatisation (6), et une pompe de circulation (8) en tant que dispositifs constitutifs, la pompe à chaleur (2), l'échangeur de chaleur (5), le dispositif de climatisation (6), et la pompe de circulation (8) étant connectés par des canalisations afin de former un circuit d'eau (10) dans lequel l'eau circule dans les canalisations, l'appareil de climatisation (1) comprenant :
une pluralité de capteurs disposés au niveau de parties du circuit d'eau (10), et configurés pour mesurer un état de l'eau circulant le long du circuit d'eau (10) à des intervalles préréglés ; et
un contrôleur (20) configuré pour acquérir des éléments de données de mesure envoyés par la pluralité de capteurs en tant que données de fonctionnement, et pour générer des données de fonctionnement de référence sur la base des données de fonctionnement acquises quand un fonctionnement stable est obtenu,
**caractérisé en ce que** le contrôleur (20) est configuré pour :
générer des informations de fonctionnement anormal comprenant un motif anormal qui indique des valeurs des capteurs différentes de celles obtenues habituellement, sur la base des données de fonctionnement lors d'un arrêt anormal de l'appareil de climatisation (1), et
déterminer un dispositif en panne parmi les dispositifs constitutifs, sur la base d'une valeur de différence entre les données de fonctionnement lors de l'arrêt anormal, et les données de fonctionnement de référence, quand un motif identifié en tant que motif anormal se produit un nombre de fois préréglé ou plus au cours d'une période préréglée.

2. Appareil de climatisation (1) selon la revendication 1, dans lequel le contrôleur (20) est configuré pour :
stocker des données de fonctionnement dans lesquelles la valeur de la différence entre les données de fonctionnement et les données de fonctionnement de référence, est égale ou inférieure à un seuil,
déterminer, lorsque le nombre d'éléments de données de fonctionnement stockées, est égal ou supérieur à un nombre préréglé, une similitude d'éléments de données spécifiques comprises dans chacun des éléments de données de fonctionnement stockées, et
corriger, lorsque le rapport des données de fonctionnement semblables comprenant des éléments semblables de données spécifiques, sur tous les éléments de données de fonctionnement stockées, est égal ou supérieur à un rapport préréglé, les données de fonctionnement de référence sur la base des données de fonctionnement semblables.

3. Appareil de climatisation (1) selon la revendication 1 ou 2, dans lequel les données de fonctionnement de référence comprennent des éléments de données dans un format de table pour chacun des modes de fonctionnement et chacune des températures préréglées.

4. Appareil de climatisation (1) selon l'une quelconque des revendications 1 à 3, dans lequel la pluralité de capteurs comprend :
un premier capteur de température (11) configuré pour mesurer une température d'une canalisation de liquide d'un échangeur de chaleur d'eau (2a) disposé dans la pompe à chaleur (2) ;
un deuxième capteur de température (12) configuré pour mesurer une température de l'eau qui sort de l'échangeur de chaleur d'eau (2a) ;
un troisième capteur de température (13) configuré pour mesurer une température de l'eau qui sort de la pompe de circulation (8) ; et
un quatrième capteur de température (14) configuré pour mesurer une température de l'eau dans le réservoir de stockage de l'eau chaude (4).
